# EUROPEAN PATENT SPECIFICATION

(11) **EP 1 484 287 B1**
(45) Date of publication and mention of the grant of the patent: **05.04.2006**
(21) Application number: 03734736.6
(22) Date of filing: 31.01.2003
(51) Int. Cl.: C02F 3/30, C02F 3/12

(54) **HYBRID BIOLOGICAL MEMBRANE REACTOR FOR THE TREATMENT OF URBAN AND INDUSTRIAL WASTE WATER**
MEMBRAN-HYBRIDBIOREAKTOR ZUR BEHANDLUNG VON STÄDTISCHEM UND INDUSTRIELLEM ABWASSER
REACTEUR BIOLOGIQUE HYBRIDE DE MEMBRANES POUR LE TRAITEMENT D'EAUX RESIDUELLES INDUSTRIELLES ET URBAINES

(30) Priority: 01.02.2002 ES 200200244
(43) Date of publication of application: 08.12.2004
(73) Proprietor: UNIVERSIDADE DE SANTIAGO DE COMPOSTELA, 15782 Santiago de Compostela (ES)
(72) Inventor: Garrido Fernandez, Juan Manuel, 15782 Santiago de Compostela (ES); Mendez Pampen Ramon, 15782 Santiago de Compostela (ES); Oyandell Baseez, Vinka, 15782 Santiago de Compostela (ES)
(74) Representative: Carvajal y Urquijo, Isabel
(86) International application number: PCT/ES2003/000057
(87) International publication number: WO 2003/064335

(56) References cited:
- EP-A1- 0 002 115
- WO-A1-01/05715
- WO-A1-01/72644
- ES-T3- 2 097 528
- US-A- 4 122 013
- US-A- 4 904 387

## Description

This invention refers to a hybrid biological membrane reactor for the treatment of industrial and urban waste water with organic and nitrogenous Matter. It is constituted of three chambers: anoxic, aerobic and membrane filtration chambers. The proposed reactor is a compact system with which very low or negligible levels of solids in suspension in the purified effluent are obtained.

Description of the state of the art of the main: A) Technologies in biological treatment and elimination processes of organic and nitrogenous pollutants; and B) Membrane bioreactor and hybrid reactor systems for waste water treatment.

### A) Biological waste water treatment technologies.

Biological treatment systems are widely used for eliminating organic pollutants composed of nitrogen and phosphorus, and are based on biological processes which use cultures of different species of microorganisms, mainly bacteria, fungi, algae, protozoa and metazoa.

The elimination of organic and nitrogenous matter in biological treatment systems is carried out by means of two types of microorganisms: heterotrophic microorganisms and nitrifying bacteria. The heterotrophic microorganisms are characterized by using organic compounds in their growth, under both aerobic (using oxygen as an oxidizing agent) or anoxic (reducing nitrite or nitrate to gaseous nitrogen) conditions. The nitrifying bacteria oxidize ammonium to nitrite or nitrate, under aerobic conditions and are characterized by having a lower growth rate and lower cell production rate than the heterotrophic bacteria.

The traditional processes are classified in: (A.1) suspended biomass treatment systems, and (A.2) biofilm systems. The first systems are characterized in that the microorganisms grow forming flocs which are placed in contact with the waste water; and the second systems are characterized in that the microorganisms grow on solid carriers, forming microbial aggregates called biofilms (Metcalf & Eddy Inc. Ingenieria de Aguas Residuales, Ed. McGraw Hill, (1995); Henze *et al.* Wastewater treatment. Ed. Springer, (1997)).

The hybrid treatment processes would be a third type of systems combining the presence of biomass in suspension and biofilm-forming biomass.
A.1) The active sludge process developed in the United Kingdom in 1914 (Andern E. and Lockett W.T.J. Soc. Chem. Ind. 33, 523 (1914)) stands out in the biomass in suspension systems. It is provided with a reactor where a microbial culture in suspension is maintained under aerobic conditions, and a settler for separating the treated waste water from the microbial sludge, recirculating it to the biological system. The active sludge process was initially designed for eliminating polluting organic matter, but different configurations of the process for eliminating nitrogen and phosphorus compounds from the waste water were subsequently developed. Configurations provided with one or multiple reactors are normally used, which are continuously or intermittingly maintained under anoxic or anaerobic conditions for the purpose of promoting the additional elimination of these nutrients. One of the important drawbacks of the system is that it operates with low biomass concentrations, limiting the pollutant conversion rate in the unit, so that relatively large units should therefore be built. In spite of this, it is the most used biological treatment process because it is heavy-duty and reliable.
A.2) The following stand out in the immobilized microorganism biofilm systems: 1) trickling filters, 2) rotating biological contactors and 3) submerged biological filters.
   A.2.1) Trickling filters packing material used since the 19^{th} century, consist of a column provided with a fille of pebbles, stones, strips of wood, plastic carrier, etc.) which is held in place and on which a biofilm formed by microorganisms grows. In the column, open at its upper and lower ends, the waste water is distributed throughout the entire system, placing the waste water, biofilms and the air into contact. The main applications of the trickling filters are the elimination of organic matter and the biological nitrification treatment. Their use is not recommended when it is necessary to eliminate nitrogen from the waste water.
   A.2.2) Rotating biological contactors, known as biodisks, are formed by a high specific surface plastic disk carriers on which a biofilm grows; the disks, coupled to a rotating shaft, are partially submerged in the waste water. The rotation of the disks allows the correct transfer of oxygen from the air to the biofilm and facilitates the contact of the biofilm with the pollutants present in the waste water. The biodisk process originated in the Technical University of Stuttgart (Germany) in 1955, and the first industrial scale plant was started up in the United States in 1969. The biodisks have the same drawback as the trickling filters, so that they are therefore rarely used if nitrogen is to be eliminated.
   A.2.3) The operating principle of the submerged biological filters is similar to that of the trickling filters, although in these systems, the column containing the carrier is completely inundated with waste water. The air supply, if it were necessary, is ensured by means of the injection of air and there are also units operating under anoxic conditions for denitrification. The carriers for the growth of the biofilms are organic materials such as polyethylene, polystyrene, polyurethane, expanded clay granular particles, pozzolan particles, sand, or other materials with sizes generally comprised between 1 and 5 mm. The first industrial scale biofilters were developed in the 1970s in France using expanded clays as a carrier (Lazarova and Manen, Biofilms II: Process Analysis and Applications, Editor James E. Bryers, (2000)). Some of these systems used granular plastic carriers having a density which is slightly less than that of the water (patents FR2707183 and WO9713727), on which a biofilm grows, which permits fluidizing said carriers in a simple manner introducing a gas flow into the system. The submerged biofilters are very compact units used for different purposes: anaerobic elimination, denitrification and/or aerobic oxidation of organic matter as well as nitrification of ammonium in waste waters, and they have relatively high pollutant elimination rates. One of the most general drawbacks for their application is derived from the great technical complexity.

### B) Membrane bioreactor and hybrid reactor systems for waste water treatment.

The hybrid systems are characterized by combining the presence of biomass in suspension with biomass immobilized in a carrier in the same system, which allows maintaining higher biocatalyst concentrations than those which are used in biomass in suspension reactors, this particularity constitutes an advantage, since the waste water can be purified in hybrid equipment which are more compact than the classic active sludge systems. Furthermore, the possibility exists of transforming the already built active sludge plants into hybrid system plants by carrying out small modifications in the civil work and adding a suitable carrier so as to increase the treatment capacity of the plant.

The hybrid reactors are becoming more and more important in the purification of waste waters with organic and nitrogenous matter, since they combine the heavy-duty nature of the active sludge systems with the greater purification capacity of the biofilm systems.

Examples of hybrid systems are US patent 5,061,368 and the literature (Andreottola et al.; Münch et al.; Ødegaard et al.; Wat. Sci. Technol. v41, number 4-5 (1999)), which use plastic carriers like those disclosed in US patents US 5,458,779, US 5,543,039 and US 6,126,829 to improve the yield of different biological reactors in which biomass grows in suspension as well as in biofilms.

US patent 5,061,368 uses a hybrid system which alternates anaerobic and anoxic chambers, maintaining biomass in suspension in the entire system and biomass immobilized in gel cubes retained in nitrifying aerobic chambers. A drawback of this system is that it artificially immobilizes nitrifying microorganisms in polyethylene glycol gel cubes which must be periodically replaced so as to substitute those gel particles which break or wear, it is therefore necessary to manufacture new gel cubes, not only during the slart-up stage, but also during the continuous operation of the system. Furthermore, high load rates cannot be applied since they may cause the gel cubes to break due to the increased growth rate of the immobilized microorganisms.

Another drawback of the systems disclosed in the publications mentioned above are those which can arise from the application of high organic load rates, as well as from the physicochemical features of the waste water, which can negatively affect the settleability properties of the sludge which is generated in the biological systems and can therefore negatively affect the separation, by means of settlers, of solids from the treated water. Said hybrid systems use settlers due to which, for certain applications and under certain conditions, their efficiency can be affected by an incorrect separation of the solids from the treated water.

The first reference of the use of membrane systems dates back to 1969. An ultrafiltration membrane was used for separating the treated waste water from the biomass in an active sludge system. The combination of the two technologies has lead to the development of three groups of biological membrane processes; i) liquid-solid separation by means of membranes for retaining the biomass in biological reactors; ii) the use of membranes permeable to a gaseous compound for the transfer of oxygen without bubbling in reactors; iii) an extractive membrane process applied for eliminating degradable organic compounds in problematic industrial waste waters (Brindle K. and Stephenson T., Biotechnol. Bioeng. 49, 601-610 (1996)). It is worth pointing out that the hybrid membrane system proposed in our invention is an additional novel application of the first group (i), where membrane filtration systems are used for separating the waste water from the microorganisms.

The majority of current biological treatment systems using membranes are modifications of the active sludge process, where the secondary settler, used in traditional processes, has been substituted with membrane filtration units for separating the microorganisms in suspension from the water treated in biomass in suspension reactors. The membranes used for this purpose are microfiltration or ultrafiltration membranes manufactured with organic or inorganic materials arranged on hollow fiber, plate or tubular, modules which can be arranged inside or outside of the biological reactor (Günder B. and Krauth K., Wat. Sci. Technol., vol 38, pp 382-393 (1998); Buisson H. et al. Wat. Sci. Technol. 37(9), pp 89-95 (1998); Günder B. and Krauth K., Wat. Sci. Technol., vol 40, pp 311-320 (1999), Ghyoot W. and Verstraete W., Wat. Res., 34, pp 205-215, (2000)). There are also different patents based on the use of different membrane filtration modules which can or could be used in the separation of the waste water treated in biomass in suspension bioreactors (US patents 5,558,774 and 6,303,035).

The present invention implies improvements in the waste water biological treatment systems, in general, and hybrid reactors in particular. One of the main features of the hybrid reactor proposed is that of confining particles of a plastic granular of a plastic granular carrier in the aerobic chamber, having a density slightly less than that of the water. This carrier neither breaks nor deteriorates by use in the system; furthermore, if will not break due to growth of the biomass therein (as can occur in systems using microorganisms immobilized in the polymeric gets), since the growth is limited to the surface of the plastic carrier. Thus, the need to have an available stock of gel particles with microorganisms is also saved.

Another advantage is the use of a hollow fiber membrane filtration system. As was mentioned, in hybrid systems using settlers for separating the purified water from the biological sludge, the efficiency of the separation depends on the settleability properties of the sludge, and it can worsen if high polluting loads are applied in the system. The proposed membrane filtration system makes the process of separating the treated waste water and the sludge with settleability properties independent, therefore higher load rates can be applied without the risk of undergoing operation problems in the system. Furthermore, the possible washing of the sludge of the biological reactor is prevented.

The assembly of membrane filtration units in the hybrid reactor makes it possible to obtain an effluent with low levels of solids in suspension, which would comply with the most demanding dumping requirements of this pollutant, significantly decreases the dumping of microorganisms with the effluent (including pathogens and other health vectors); furthermore, it is suitable for dumping close to marine culture areas or fish hatcheries and collection areas for collecting waters used for irrigation or for producing drinking water.

In the proposed biological reactor, the plastic granular carrier with the biofilms are confined in the aerobic chamber, using separation devices which allow the free passage of the mixed liquor, with the microorganisms in suspension between the three chambers which the unit consists of.

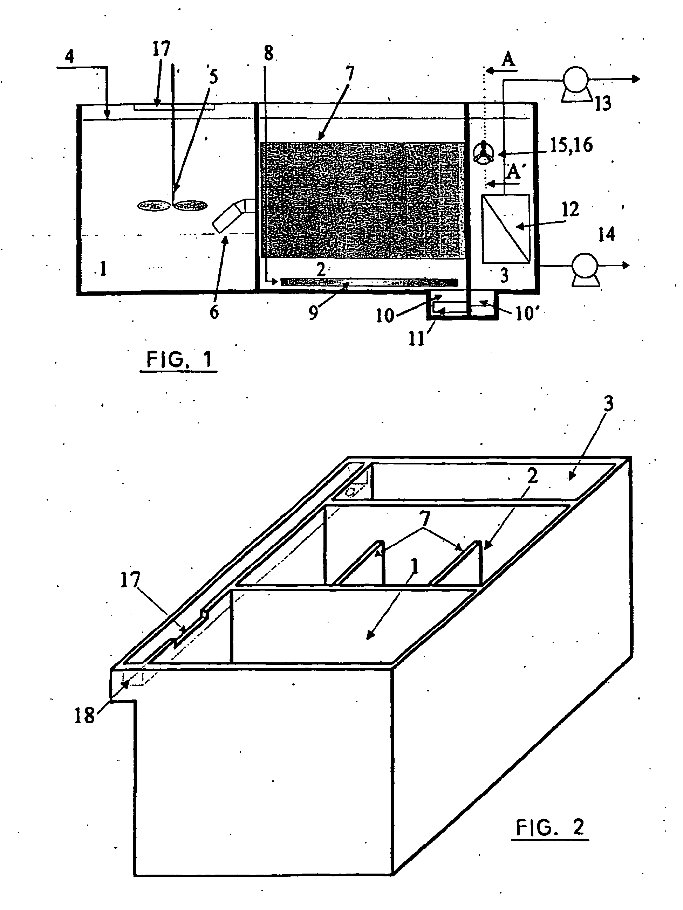

With this proposal, it is possible to operate the system with a sludge in suspension containing a high fraction of heterotrophic microorganisms needed for denitrifying in the anoxic chamber and eliminating the soluble organic matter residue which could reach the aerobic chamber; thus, the growth of heterotrophic bacteria in the biofilm is limited, the growth of nitrifying bacteria in the biofilm is promoted and because of this, it prevents the nitrifying capacity of the biofilm growing on the plastic carrier from being inhibited or reduced. All this allows applying and operating with relatively high organic (kg COD/m³·d) and nitrogenous (kg N-NH₄ +/m³·d) loads and which are higher than that of the aforementioned systems, without the system undergoing, as a result, decreases of purification efficiency or problems due to the breaking or clogging of the carrier due to the growth of the biomass. Figures 1-5 show the hybrid biological membrane reactor:
Figure 1 shows a scheme of the reactor constituted of three chambers: anoxic chamber (1), aerobic chamber (2) and filtration chamber (3).
Figure 2 shows a three-dimensional perspective view of the reactor, showing the three chambers, the two deflector plates (7) of the aerobic chamber, waste water recirculation channel (18) and weir (17). The civil work has been pointed out, omitting auxiliary equipment.
Figure 3 shows a shape and arrangement of the mixed liquor passage conduit (6) from the anoxic chamber (1) to the aerobic chamber (2).
Figure 4 shows collection wells (10 and 10') of the mixed liquor from the aerobic chamber (2) to the filtration chamber (3). The conduit (11) is used for carrying the waste water between the chambers.
Figure 5 shows an AA' section (in figure 1) view showing a impeller device for driving the mixed liquor from the filtration chamber to the anoxic chamber, showing the centrifugal stirrer (15), the conduit (16) and the recirculation channel (18).

Figures 1 and 2 represent the essential features of the system. It consists of three chambers: anoxic chamber (1); air-lift type aerobic chamber (2); and filtration chamber (3). The microbial sludge in suspension is maintained in the three chambers. Confined in the aerobic chamber (2) there is also a granular and coarse plastic carrier having a density of less than that of the water, on which carrier a biofilm with a high fraction of nitrifying microorganisms grows. The system incorporates in its filtration chamber (3) hollow fiber ultrafiltration membrane modules (12) which are used for separating the treated water from the biological sludge, recirculating the sludge from this chamber to the anoxic chamber (1).

Figure 1 shows how the waste water is introduced into the anoxic chamber (1) through the conduit located in the upper part thereof (4), the influent mixing with the mixed liquor present in the chamber. The homogeneity of the mixture formed by microorganisms in suspension and waste water is ensured using a suitable mechanical stirring device (5), such as a propeller mixer or mechanical stirrer.

The biological denitrification occurs in chamber (1), due to which part of the nitrogen anions present in the water are reduced to gaseous nitrogen by means of the biocatalyst present, furthermore carrying out the elimination of a high fraction of the organic pollutants in the denitrification process and the absorption of soluble organic compounds, such that it eliminates part of the organic matter from the water which otherwise could be assimilated by the biofilms present in the aerobic chamber (2).

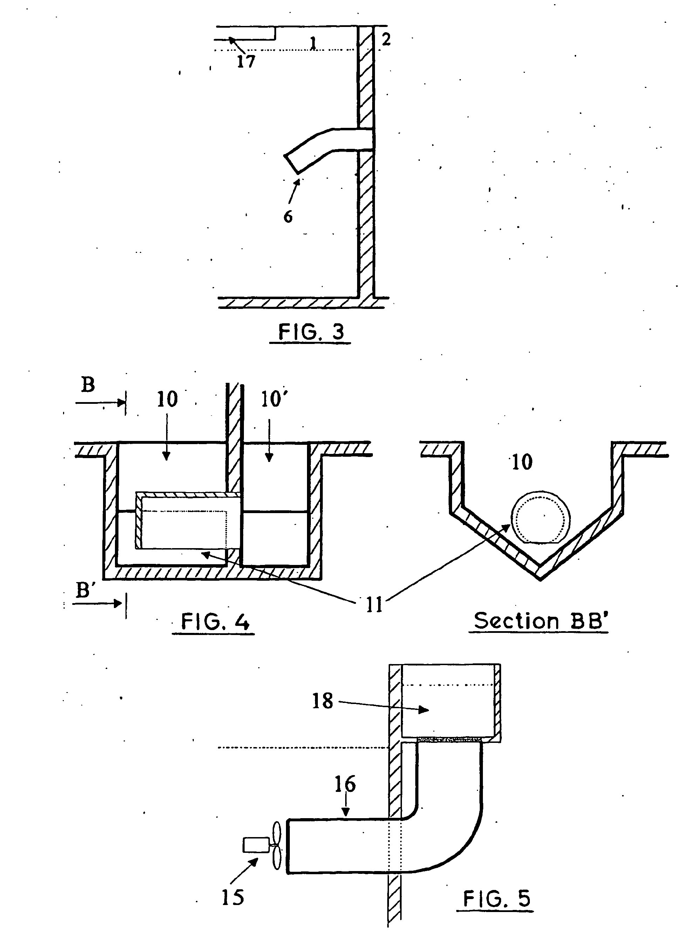

The conduit of figure 3 allows the passage of the mixed liquor from the anoxic chamber (1) to the aerobic chamber (2). This passage way is formed by one or more circular-section conduits (6) through which the mixed liquor coming from (1) to (2) circulates. The angled design of the conduit is proposed such that the re-mixing of the fluid between chambers is limited and the entrance of the carrier of the aerobic chamber (2) to the anoxic chamber (1), as well as the sludge deposit therein, is minimized or prevented. The inclination of the inclined span of the tube with regard to the horizontal span thereof will be comprised between 20° and 90°.

The aerobic chamber is an air-lift type device in which two deflector plates or baffles dividing this chamber into three rectangular sections (figures 1 and 2) are assembled: a central section called a riser, which on its lower part is provided with diffusers through which air is distributed, and two sections on the sides called downcomers. A rough granular plastic carrier is confined in this aerobic chamber (2), which has a density from 5% to 15% less than that of the water, the size of the carrier particles comprised between 1.5 and 5 mm and on which particles the biofilm grows. It is recommended to use a rough high density polyethylene carrier with the previously disclosed features, or like those disclosed in patents FR2707183 and W09713727, which use a granular plastic carrier for waste water treatment in biofilm biological systems, unlike the hybrid biological membrane reactor proposed in our invention. The carrier volume fraction in this chamber will be comprised between 15 and 25% v/v, according to the application.

In the aerobic chamber, the introduction of the necessary airflow is carried out from the air supply conduit (8) towards a cluster of grid assembled diffusers (9) located in the lower part of the riser section. The airflow will be suitable so as to ensure the transfer of the oxygen necessary for producing the biochemical reactions occurring and so as to maintain the circulation of the plastic carrier and the mixed liquor in the aerobic chamber.

The correct operation of the hybrid reactor requires that the plastic granular carrier used is confined in the aerobic chamber (2). A device is arranged to prevent outflows of the plastic granular carrier towards the filtration chamber (3), with which device the mixed liquor is separated from the plastic carrier (figures 1 and 4) in the lower end of the riser area (10) next to the filtration chamber (3). The separation device is formed by a rectangular section well (10) provided with a circular section tube (11) communicating the aerobic chamber with a second well (10') located in the membrane filtration chamber. The tube used is characterized by having the end placed in the well 10 closed and the other end open towards the well 10', and a rectangular section longitudinal groove facing downwards, through which the mixed liquor passes from 10 to 10', thus the mixed liquor flowing from the aerobic chamber (2) to the filtration chamber (3) is collected, thus preventing the suction and transport of plastic carrier particles towards (3). The bottom of the wells (10 and 10') of the chambers (2) and (3) are built with a slope comprised between 20 and 45°, for the purpose of minimizing the sludge deposits in these areas (BB' section, figure 4).

The treated waste water is separated (as a permeate) from the mixed liquor in chamber (3) using cassettes which are provided with the hollow fiber membrane filtration systems. The cassettes are submerged in the mixed liquor, such that the outer part of the filtration membranes are in contact with the sludge, whereas the inner part of the fibers is in contact with the filtered effluent which is evacuated, through a conduit connected to a centrifugal pump (13), figure 1. It is recommended to use hollow fiber membrane ultrafiltration or microfiltration modules manufactured in polysulfones, polypropylene or any other suitable organic polymer. Said modules will be assembled in cassettes or rectangular structures, and with suitable membrane cleaning systems, by means of air current injection, back-washed with the permeate or any other system recommended for the application. It is recommended to use ZeeWeed® membrane filtration systems of the company Zenon Environmental Inc., or equivalent systems.

In the filtration chamber (3) the sludge surplus generated is purged in a controlled manner through a conduit which splits off from the filtration chamber (3) and is coupled to the pump (14), figure 1.

For recirculating the sludge retained in the filtration chamber (3) towards the anoxic chamber (1), it will be suitable to use a sludge recirculation device (figure 1 and figure 5) formed by a horizontal flow centrifugal impeller (15) which directs through the conduit (16) a current of mixed liquor from the filtration chamber (3) to a recirculation channel (18) located on a side of the system (figure 2 and figure 5). The sludge is recirculated through this channel, unloading the mixed liquor in the anoxic chamber (1) through a rectangular wier (17).

According to the present invention, the size of the reactor depends on the flow rate of waste water to be treated as well as on the intrinsic features of the waste water itself (concentration of pollutants, temperature, presence of inhibiting or toxic substances for the biological processes) which will influence the pollutant load rate which will be recommended for the design of the reactor.

In the case of urban or industrial waste waters with easily biodegradable organic components, the organic loading rate is comprised between 2.5 and 7 kg/m³·d of COD; the nitrification rate, referred to the aerobic chamber, is comprised between 0.5 and 1.5 kg/m³·d of N-NH₄⁺; and the denitrification rate, referred to the volume of the anoxic chamber (1), is comprised between 0.5 and 1.2 kg/m³·d of N-NOₓ⁻.

The design of the reactor will be formed by three chambers, preferably having a rectangular section, or other different combined geometric forms (oval, circular, etc.). The ratio between the volumes of the three chambers, in reference to the total volume of the reactor, will be 45% for the anoxic chamber (1), 45-50% for the aerobic chamber (2), and 5-10% for the membrane filtration chamber (3).

The hollow fiber membrane filtration modules will have the previously recommended features and specifications.

To calculate the surface of the membrane module that is needed, it is necessary to contact the supplier or manufacturer of said module. As a guideline, it is worth pointing out that the recommended modules have a capacity to filter, under stationary operation conditions, between 20 and 30 L of permeated effluent per square meter of membrane and operation time.

### EMBODIMENT

### A hybrid biological membrane reactor for treating waste waters from fish canning industries.

Effluent waste water flow rate 21 m³/h; total COD concentration measured at the system inlet 1900 mg/L, ammonium concentration 300 mg N-NH₄⁺/L.

The recirculation ratio used would be 3. The dissolved oxygen concentration in the aerobic chamber would be higher than 3 mg/L, whereas in the anoxic chamber the concentration of oxygen would be maintained below 0.3 mg/L. The ammonium loading rate in the aerated section limits the volume of the system, and is established at 1.0 kg N-NH₄⁺/m³·d. The organic matter load in the system would be 2.9 kg COD/m3·d. The total volume of the reactor would be 14 m³, and considering that the percentages of the total volume of the anoxic, aerobic chambers and of the membrane compartment are 45%, 45% and 10% of the total volume, 6.3 m³ would correspond to the aerobic tank, 6.3 m³ to the anoxic tank and the compartment of the membrane unit would have a volume of 1.4 m³. A volume of 1.26 m³ (20% v/v) of plastic granular carrier, having the previously indicated features, is needed to promote the growth of nitrifying biofilms in the aerobic chamber.

The system is capable of nitrifying 98% if the ammonium load applied to the system is (0.98 kg N-NH₄⁺/ m³·d), the elimination of nitrogen reaches 86%, whereas the elimination of the total COD in the system (total volume) is 92% (2.7 kg COD/ M³·d).

## Claims

1. A hybrid biological membrane reactor for industrial and urban wastewater treatment which comprises the following elements:
(a) a chamber (1) maintained under anoxic conditions, said chamber being fitted with at least one mechanical stirring device;
(b) an airlift-type chamber (2) maintained under aerobic conditions;
(c) at least one conduit (6), connecting said anoxic chamber (1) with said aerobic chamber (2), comprising a span inclined upwards followed by another horizontal span;
(d) a membrane filtration chamber (3);
(e) a separation device between said aerobic chamber (2) and said membrane filtration chamber (3) to separate the liquor from carrier particles; and
(f) a recirculation device connecting said membrane filtration chamber (3) and said anoxic chamber (1);
**characterized in that**
(i) said aerobic chamber (2), contains particles of plastic granular carrier, adequate for the growth of microorganisms on their surfaces, said carrier having lower density than water; and two deflector plates (7), dividing the aerobic chamber (2) into three sections connected between each other, the central section having an air diffuser in its lower part;
(ii) the inclination of said inclined span of said conduit (6), with regard to the horizontal span is comprised between 20° and 90°; and
(iii) said membrane filtration chamber (3), comprises submerged hollow fiber ultrafiltration membrane modules (12), a conduit connected to a centrifugal pump (13); and a conduit which splits off from the filtration chamber (3), and is coupled to a pump (14).

2. A reactor according to claim 1, **characterized in that** said granular carrier has a density comprised between 5% and 15% less than water.

3. A reactor according to any of claims 1 or 2, **characterized in that** said granular carrier is coarse high density polyethylene plastic.

4. A reactor according to any of claims 1 to 3, **characterized in that** said granular carrier has a size comprised between 1.5 and 5 mm.

5. A reactor according to any of claims 1 to 4, **characterized in that** the volume of said granular carrier is comprised between 15 and 25% v/v, with reference to the volume of said aerobic chamber (2) and the density of said granular carrier is from 5 to 15% less than water.

6. A reactor according to any of claims 1 to 5, **characterized in that** said membrane ultrafiltration modules (12) comprise polysulfones, polypropylene or any other suitable polymer.

7. A reactor according to any of claims 1 to 6, **characterized in that** said membrane ultrafiltration modules (12) are provided with suitable membrane cleaning systems, by means of air current, back-washing with permeate or any other system compatible with the application.

8. A reactor according to any of claims 1 to 5 and claim 7, **characterized in that** said membrane ultrafiltration modules (12) are ZeeWeed® membrane filtration modules of the company Zenon Environmental Inc.

9. A reactor according to any of claims 1 to 8, **characterized in that** said recirculation device comprises a conduit (16), being connected to a centrifugal impeller (15) on one end, and to a recirculation channel (18) on the opposite end, such that the sludge recirculated through said channel (18), is unloaded in said anoxic chamber (1) by means of a rectangular overflow (17).

10. A hybrid biological membrane reactor according to any of claims 1 to 9, **characterized in that** said separation device comprises a well (10), provided with a tube (11), communicating the aerobic chamber (2) with a second well (10') located in the membrane filtration chamber (3) such that, one end of said tube (11) is closed towards the aerobic chamber (2), and the other end is open towards the well (10'), having a rectangular section longitudinal groove, facing downwards.

11. A hybrid biological membrane reactor according to claim 10, **characterized in that** the bottom of said well (10) and said well (10'), are built with a slope comprised between 20 and 45°.

12. A wastewater treatment process, comprising the following steps:
(a) providing an anoxic chamber (1) connected to an aerobic chamber (2) which is connected to a membrane filtration chamber (3) and a recirculation device allowing recirculation of part of the mixed liquor between said membrane filtration chamber (3) and said anoxic chamber (1), in all of which a microbial sludge is maintained in suspension;
(b) bringing in wastewater in said anoxic chamber (1), in which homogenization is performed by means of a mechanical stirring device (5); so that part of the nitrogen anions present in the wastewater are reduced to gaseous nitrogen by means of a biocatalyst; and allowing the passage of part of the mixed liquor towards said aerobic chamber (2) by means of a conduit (6);
(c) providing microorganisms to said aerobic chamber (2), capable of oxidizing and nitrifying organic matter; and allowing the passage of the mixed liquor towards said filtration chamber (3) by means of a separation device;
(d) wherein the mixed liquor within said membrane filtration chamber (3) is filtered and part of said mixed liquor is allowed to recirculate towards said anoxic chamber (1), by means of said recirculation device;
**characterized in that**
(i) the microorganisms within said aerobic chamber (2) grow both in suspension and on the surfaces of particles of plastic granular carrier, said carrier having lower density than water and being fluidized by means of air diffusers;
(ii) treated wastewater is separated from the mixed liquor within said membrane filtration chamber (3) using cassettes which are provided with hollow fiber membrane filtration systems, said cassettes being submerged in the mixed liquor, such that the outer part of the filtration membranes are in contact with the sludge, whereas the inner part of the fibers are in contact with the filtered effluent which is evacuated through a conduit connected to a centrifugal pump (13) the sludge surplus generated being purged in a controlled manner through a conduit coupled to a pump (14).

13. A wastewater treatment process according to claim 12, **characterized in that** said granular carrier has a density comprised between 5% and 15% less than water.

14. A wastewater treatment process according to any of claims 12 or 13, **characterized in that** said granular carrier is coarse high density polyethylene plastic or any other similar plastic product.

15. A wastewater treatment process according to any of claims 12 to 14, **characterized in that** said granular carrier has a size comprised between 1.5 and 5 mm.

16. A wastewater treatment process according to any of claims 12 to 15, **characterized in that** the volume of said granular carrier is comprised between 15 and 25% v/v, with reference to the volume of said aerobic chamber (2) and the density of said granular carrier is from 5 to 15% less than water.

## Patentansprüche

1. Hybrid-Bio-Membran-Reaktor zum Behandeln von industriellem und städtischem Abwasser, aufweisend die folgenden Elemente:
(a) eine Kammer (1), welche unter anoxischen Bedingungen gehalten ist, wobei die Kammer mit zumindest einer mechanischen Rühr-Vorrichtung ausgerüstet ist,
(b) eine airlift-artige Kammer (2), welche unter aeroben Bedingungen gehalten ist,
(c) zumindest ein Leitungsrohr (6), welches die anoxische Kammer (1) mit der aeroben Kammer (2) verbindet, aufweisend einen nach oben geneigten Abschnitt, welcher von einem anderen, horizontalen Abschnitt gefolgt ist,
(d) eine Membran-Filtrations-Kammer (3),
(e) eine Trenn-Vorrichtung zwischen der aeroben Kammer (2) und der Membran-Filtrations-Kammer (3), um die Flüssigkeit von Träger-Partikeln abzutrennen, und
(f) eine Rezirkulations-Vorrichtung, welche die Membran-Filtrations-Kammer (3) und die anoxische Kammer (1) verbindet,
**dadurch gekennzeichnet, dass**
(i) die aerobe Kammer (2) Partikel aus granulatförmigem Kunststoff-Träger, welche für das Wachstum von Mikroorganismen auf ihren Oberflächen geeignet sind, wobei der Träger eine geringere Dichte hat als Wasser, und zwei Ablenkplatten (7) enthält, welche die aerobe Kammer (2) in drei miteinander verbundene Abschnitte unterteilen, wobei der zentrale Abschnitt einen Luftverteiler in seinem unteren Teil aufweist,
(ii) die Neigung von dem geneigten Abschnitt von dem Leitungsrohr (6) bezüglich des horizontalen Abschnitts zwischen 20° und 90° liegt und
(iii) die Membran-Filtrations-Kammer (3) untergetauchte Hohlfaser-Ultrafiltrations-Membran-Module (12), ein an eine Zentrifugalpumpe (13) angeschlossenes Leitungsrohr und ein von der Filtrations-Kammer (3) abzweigendes und mit einer Pumpe (14) verbundenes Leitungsrohr aufweist.

2. Reaktor nach Anspruch 1, **dadurch gekennzeichnet, dass** der granulatförmige Träger eine um zwischen 5% und 15% geringere Dichte als Wasser hat.

3. Reaktor nach einem der Ansprüche 1 oder 2, **dadurch gekennzeichnet, dass** der granulatförmige Träger grobkörniger Polyethylen-Kunststoff hoher Dichte ist.

4. Reaktor nach einem der Ansprüche 1 bis 3, **dadurch gekennzeichnet, dass** der granulatförmige Träger eine Größe von zwischen 1,5 und 5 mm hat.

5. Reaktor nach einem der Ansprüche 1 bis 4, **dadurch gekennzeichnet, dass** das Volumen von dem granulatförmigen Träger zwischen 15 und 25 Vol% liegt, bezogen auf das Volumen von der aeroben Kammer (2), und die Dichte von dem granulatförmigen Träger um 5 bis 15% geringer ist als die von Wasser.

6. Reaktor nach einem der Ansprüche 1 bis 5, **dadurch gekennzeichnet, dass** die Membran-Ultrafiltrations-Module (12) Polysulfon, Polypropylen oder ein anderes geeignetes Polymer aufweisen.

7. Reaktor nach einem der Ansprüche 1 bis 6, **dadurch gekennzeichnet, dass** die Membran-Ultrafiltrations-Module (12) mit geeigneten Membran-Reinigungs-Systemen vorgesehen sind, mittels Luftströmung, Rück-Waschens mit Permeat oder einem anderen System, welches mit der Anwendung kompatibel ist.

8. Reaktor nach einem der Ansprüche 1 bis 5 und Anspruch 7, **dadurch gekennzeichnet, dass** die Membran-Ultrafiltrations-Module (12) ZeeWeed® Membran-Filtrations-Module der Firma Zenon Environmental Inc. sind.

9. Reaktor nach einem der Ansprüche 1 bis 8, **dadurch gekennzeichnet, dass** die Rezirkulations-Vorrichtung ein Leitungsrohr (16) aufweist, welches an einem Ende an ein Zentrifugal-Laufrad (15) und an dem gegenüberliegenden Ende an eine Rezirkulations-Rinne (18) angeschlossen ist, derart, dass der durch die Rinne (18) rezirkulierte Schlamm in der anoxischen Kammer (1) mittels eines rechteckförmigen Überlaufs (17) abgeladen wird.

10. Hybrid-Bio-Membran-Reaktor gemäß einem der Ansprüche 1 bis 9, **dadurch gekennzeichnet, dass** die Trenn-Vorrichtung einen Schacht (10) aufweist, welcher mit einem Rohr (11) vorgesehen ist, welches die aerobe Kammer (2) mit einem zweiten Schacht (10') verbindet, welcher in der Membran-Filtrations-Kammer (3) angeordnet ist, derart, dass ein Ende von dem Rohr (11) in Richtung zu der aeroben Kammer (2) geschlossen ist und das andere Ende in Richtung zu dem Schacht (10') offen ist, und welches eine nach unten gerichtete längliche Aussparung von rechteckförmigem Querschnitt aufweist.

11. Hybrid-Bio-Membran-Reaktor nach Anspruch 10, **dadurch gekennzeichnet, dass** der Boden von dem Schacht (10) und der Boden von dem Schacht (10') mit einer Neigung, welche zwischen 20 und 45° liegt, gebaut sind.

12. Abwasser-Behandlungs-Verfahren, aufweisend die folgenden Schritte:
(a) Vorsehen einer anoxischen Kammer (1), welche mit einer aeroben Kammer (2) verbunden ist, welche mit einer Membran-Filtrations-Kammer (3) verbunden ist, und einer Rezirkulations-Vorrichtung, welche ein Rezirkulieren von einem Teil der Mischflüssigkeit zwischen der Membran-Filtrations-Kammer (3) und der anoxischen Kammer (1) zulässt, in all denen ein mikrobieller Schlamm in Suspension gehalten wird,
(b) Einbringen von Abwasser in die anoxische Kammer (1), in welcher ein Homogenisieren durchgeführt wird mittels einer mechanischen Rühr-Vorrichtung (5), so dass ein Teil von den Stickstoff-Anionen, welche in dem Abwasser präsent sind, mittels eines Biokatalysators zu gasförmigem Stickstoff reduziert wird, und Ermöglichen des Durchtritts von einem Teil der Mischflüssigkeit in Richtung zu der aeroben Kammer (2) mittels eines Leitungsrohrs (6),
(c) Vorsehen von Mikroorganismen in der aeroben Kammer (2), welche geeignet sind, organische Substanz zu oxidieren und nitrifizieren, und Ermöglichen des Durchtritts der Mischflüssigkeit in Richtung zu der Filtrations-Kammer (3) mittels einer Trenn-Vorrichtung,
(d) wobei die Mischflüssigkeit in der Membran-Filtrations-Kammer (3) gefiltert wird und es einem Teil der Mischflüssigkeit ermöglicht wird, in Richtung zu der anoxischen Kammer (1) zu rezirkulieren mittels der Rezirkulations-Vorrichtung,
**dadurch gekennzeichnet, dass**
(i) die Mikroorganismen in der aeroben Kammer (2) sowohl in der Suspension als auch auf den Oberflächen der Partikel aus granulatförmigem Kunststoff-Träger wachsen, wobei der Träger eine geringere Dichte als Wasser hat und mittels Luftverteilern fluidisiert wird,
(ii) behandeltes Abwasser von der Mischflüssigkeit in der Membran-Filtrations-Kammer (3) abgetrennt wird unter Verwendung von Kassetten, welche mit Hohlfaser-Membran-Filtrations-Systemen vorgesehen sind, wobei die Kassetten in der Mischflüssigkeit untergetaucht sind, derart, dass der äußere Teil der Filtrations-Membranen in Kontakt mit dem Schlamm ist, wohingegen der innere Teil der Fasern in Kontakt mit dem gefilterten, gereinigten Wasser ist, welches durch ein Leitungsrohr abtransportiert wird, welches an eine Zentrifugalpumpe (13) angeschlossen ist, wobei der erzeugte Schlammüberschuss in einer gesteuerten Art durch ein Leitungsrohr, welches mit einer Pumpe (14) verbunden ist, abgeführt wird.

13. Abwasser-Behandlungs-Verfahren nach Anspruch 12, **dadurch gekennzeichnet, dass** der granulatförmige Träger eine um zwischen 5% und 15% geringere Dichte als Wasser hat.

14. Abwasser-Behandlungs-Verfahren nach einem der Ansprüche 12 oder 13, **dadurch gekennzeichnet, dass** der granulatförmige Träger grobkörniger Polyethylen-Kunststoff hoher Dichte oder ein anderes ähnliches Kunststoff-Erzeugnis ist.

15. Abwasser-Behandlungs-Verfahren nach einem der Ansprüche 12 bis 14, **dadurch gekennzeichnet, dass** der grobkörnige Träger eine Größe von zwischen 1,5 und 5 mm hat.

16. Abwasser-Behandlungs-Verfahren nach einem der Ansprüche 12 bis 15, **dadurch gekennzeichnet, dass** das Volumen von dem granulatförmigen Träger zwischen 15 und 25 Vol% liegt, bezogen auf das Volumen von der aeroben Kammer (2), und die Dichte von dem granulatförmigen Träger um 5 bis 15% geringer ist als die von Wasser.

## Revendications

1. Réacteur biologique hybride à membrane pour le traitement d'eaux résiduelles industrielles et urbaines, comportant les éléments suivants :
(a) une chambre (1) maintenue dans des conditions anoxiques, ladite chambre étant équipée d'au moins un dispositif d'agitation mécanique ;
(b) une chambre du type aérotransporté (2) maintenue dans des conditions aérobies ;
(c) au moins un conduit (6) reliant ladite chambre anoxique (1) à ladite chambre aérobie (2), comportant un tronçon incliné vers le haut, suivi d'un autre tronçon horizontal ;
(d) une chambre de filtration à membrane (3) ;
(e) un dispositif de séparation entre ladite chambre aérobie (2) et ladite chambre de filtration à membrane (3), pour séparer la liqueur des particules de porteur ; et
(f) un dispositif de recirculation reliant ladite chambre de filtration à membrane (3) et ladite chambre anoxique (1) ;
**caractérisé par le fait que**
(i) ladite chambre aérobie (2) contient des particules d'un porteur granulaire plastique appropriées pour la croissance de micro-organismes sur leurs surfaces, ledit porteur ayant une plus faible densité que l'eau ; et deux plaques déflectrices (7) divisant la chambre aérobie (2) en trois segments reliés entre eux, le segment central présentant un diffuseur d'air dans sa partie inférieure ;
(ii) l'inclinaison dudit tronçon incliné dudit conduit (6) par rapport au tronçon horizontal est comprise entre 20° et 90° ; et
(iii) ladite chambre de filtration à membrane (3) comprend des modules à membrane d'ultrafiltration de fibre creuse submergés (12), un conduit relié à une pompe centrifuge (13) ; et un conduit qui part de la chambre de filtration (3) et est couplé à une pompe (14).

2. Réacteur selon la revendication 1, **caractérisé par le fait que** ledit porteur granulaire a une densité de 5% à 15% inférieure à celle de l'eau.

3. Réacteur selon l'une ou l'autre des revendications 1 ou 2, **caractérisé par le fait que** ledit porteur granulaire est un plastique polyéthylène haute densité à gros grains.

4. Réacteur selon l'une ou l'autre des revendications 1 à 3, **caractérisé par le fait que** ledit porteur granulaire a une grandeur comprise entre 1,5 et 5 mm.

5. Réacteur selon l'une ou l'autre des revendications 1 à 4, **caractérisé par le fait que** le volume dudit porteur granulaire est compris entre 15 et 25% v/v par rapport au volume de ladite chambre aérobie (2) et que la densité dudit porteur granulaire est de 5 à 15% inférieure à celle de l'eau.

6. Réacteur selon l'une ou l'autre des revendications 1 à 5, **caractérisé par le fait que** lesdits modules d'ultrafiltration à membrane (12) comprennent des polysulfones, du polypropylène ou tout autre polymère approprié.

7. Réacteur selon l'une ou l'autre des revendications 1 à 6, **caractérisé par le fait que** lesdits modules d'ultrafiltration à membrane (12) sont équipés de systèmes de nettoyage de membrane appropriés, au moyen de courant d'air, de lavage à contre-courant à l'aide d'un perméat ou tout autre système compatible avec l'application.

8. Réacteur selon l'une ou l'autre des revendications 1 à 5 et la revendication 7, **caractérisé par le fait que** lesdits modules d'ultrafiltration à membrane (12) sont des modules de filtration à membrane ZeeWeed® de la Société Zenon environnemental Inc.

9. Réacteur selon l'une ou l'autre des revendications 1 à 8, **caractérisé par le fait que** ledit dispositif de recirculation comprend un conduit (16) relié à un rouet centrifuge (15) à une extrémité, et à un canal de recirculation (18) à l'extrémité opposée, de sorte que la boue recirculée à travers ledit canal (18) est déchargée dans ladite chambre de anoxique (1) au moyen d'une surverse rectangulaire (17).

10. Réacteur biologique hybride à membrane selon l'une ou l'autre des revendications 1 à 9, **caractérisé par le fait que** ledit dispositif de séparation comprend un puits (10), muni d'un tube (11), communiquant la chambre aérobie (2) avec un deuxième puits (10') situé dans la chambre de filtration à membrane (3), de sorte qu'une extrémité dudit tube (11) soit fermée vers la chambre aérobie (2) et que l'autre extrémité soit ouverte vers le puits (10'), présentant une rainure longitudinale de section rectangulaire orientée vers le bas.

11. Réacteur biologique hybride à membrane selon la revendication 10, **caractérisé par le fait que** le fond dudit puits (10) et ledit puits (10') sont construits avec une pente comprise entre 20 et 45°.

12. Procédé de traitement d'eaux résiduelles, comprenant les étapes suivantes consistant à :
(a) prévoir une chambre anoxique (1) reliée à une chambre aérobie (2) qui est reliée à une chambre de filtration à membrane (3) et à un dispositif de recirculation permettant la recirculation d'une partie de la liqueur mixte entre ladite chambre de filtration à membrane (3) et ladite chambre anoxique (1), dans toutes lesquelles est maintenue en suspension une boue microbienne ;
(b) amener de l'eau usée dans ladite chambre anoxique (1), dans laquelle l'homogénéisation est réalisée à l'aide d'un dispositif d'agitation mécanique (5), de sorte qu'une partie des anions d'azote présents dans l'eau usée soit réduite à de l'azote gazeux au moyen d'un biocatalyseur ; et permettre le passage d'une partie de la liqueur mixte vers ladite chambre aérobie (2) à l'aide d'un conduit (6) ;
(c) alimenter des micro-organismes vers ladite chambre aérobie (2), à même d'oxyder et de nitrifier la matière organique ; et permettre le passage de la liqueur mixte vers ladite chambre de filtration (3) à l'aide d'un dispositif de séparation ;
(d) où la liqueur mixte dans ladite chambre de filtration à membrane (3) est filtrée et une partie de ladite liqueur mixte est laissée recirculer vers ladite chambre anoxique (1) à l'aide dudit dispositif de recirculation ;
**caractérisé par le fait que**
(i) les micro-organismes dans ladite chambre aérobie (2) croissent tant en suspension que sur les surfaces des particules du porteur granulaire plastique, ledit porteur ayant une densité inférieure à celle de l'eau et étant fluidisé au moyen de diffuseurs d'air ;
(ii) l'eau usée traitée est séparée de la liqueur mixte dans ladite chambre de filtration à membrane (3) à l'aide de cassettes qui sont équipées de systèmes de filtration à membrane de fibre creuse, lesdites cassettes étant submergées dans la liqueur mixte, de sorte que la pièce extérieure des membranes de filtration soient en contact avec la boue, tandis que la partie intérieure des fibres est en contact avec l'effluent filtré qui est évacué par un conduit relié à une pompe centrifuge (13), l'excès de boue généré étant purgé de manière contrôlée par un conduit couplé à une pompe (14).

13. Procédé de traitement d'eaux résiduelles selon la revendication 12, **caractérisé par le fait que** ledit porteur granulaire a une densité de 5% à 15% inférieure à celle de l'eau.

14. Procédé de traitement d'eaux résiduelles selon l'une ou l'autre des revendications 12 ou 13, **caractérisé par le fait que** ledit porteur granulaire est un plastique polyéthylène haute densité à gros grains ou tout autre produit plastique similaire.

15. Procédé de traitement d'eaux résiduelles selon l'une ou l'autre des revendications 12 à 14, **caractérisé par le fait que** ledit porteur granulaire a une grosseur comprise entre 1,5 et 5 mm.

16. Procédé de traitement d'eaux résiduelles selon l'une ou l'autre des revendications 12 à 15, **caractérisé par le fait que** le volume dudit porteur granulaire est compris entre 15 et 25% v/v par rapport au volume de ladite chambre aérobie (2) et que la densité dudit porteur granulaire est de 5 à 15% inférieure à celle de l'eau.
